# EUROPEAN PATENT APPLICATION

(11) **EP 4 738 201 A1**
(43) Date of publication of application: **06.05.2026**
(21) Application number: 25211978.9
(22) Date of filing: 29.10.2025
(51) Int. Cl.: G06N 3/0499, G06F 7/38

(54) **SYSTEMS AND METHODS FOR ARTIFICIAL INTELLIGENCE COMPUTATIONS**

(30) Priority: 05.11.2024 US 202463716601 P; 15.10.2025 US 202519359571
(71) Applicant: Samsung Electronics Co., Ltd., Suwon-si, Gyeonggi-do 16677 (KR)
(72) Inventor: CHOI, Chiho, San Jose, CA, 95134 (US); CHOI, Joon Hee, San Jose, CA, 95134 (US); PADMANABHAN, Sai Prahladh, San Jose, CA, 95134 (US); MALLA, Srikanth, San Jose, CA, 95134 (US)
(74) Representative: Kuhnen & Wacker Patent- und Rechtsanwaltsbüro PartG mbB

(57) **Abstract**

An apparatus, comprising: a memory storing a first vector and a second vector associated with a layer of an artificial intelligence, AI, model, the first vector comprising a first operand having a first mantissa value, and the second vector comprising a second operand having a second mantissa value; and a processor comprising: an adder circuit wired to receive the first mantissa value and the second mantissa value and generate a first sum based on the first mantissa value and the second mantissa value; and a shifter circuit wired to receive the first sum and shift the first sum by a first number of bits to generate a first shifted value; and wherein the processor is configured to generate an inference of the AI model based on the first shifted value.

## Description

### FIELD

One or more aspects of embodiments according to the present disclosure relate to artificial intelligence models, and more particularly to computations used in artificial intelligence models.

### BACKGROUND

The use of artificial intelligence (Al) has increased dramatically over the last few years. AI has become commonly used in domains such as image classification, speech recognition, media analytics, heath care, autonomous machines, smart assistants, etc. Using AI often necessitates the use of large datasets (e.g., from databases, sensors, images etc.) and the use of advanced algorithms that similarly necessitate high performance computing with teraflops of computational power.

The above information disclosed in this Background section is only for enhancement of understanding of the background of the present disclosure, and therefore, it may contain information that does not form prior art.

### SUMMARY

In one or more embodiments, an apparatus includes a memory storing a first vector and a second vector associated with a layer of an artificial intelligence (AI) model, the first vector comprising a first operand having a first mantissa value, and the second vector comprising a second operand having a second mantissa value; and a processor comprising: an adder circuit wired to receive the first mantissa value and the second mantissa value and generate a first sum based on the first mantissa value and the second mantissa value; and a shifter circuit wired to receive the first sum and shift the first sum by a first number of bits to generate a first shifted value; and wherein the processor is configured to generate an inference of the AI model based on the first shifted value. In some embodiments, the first number is based on an expected value of one or more mantissa values associated with the layer of the AI model. In some embodiments, the expected value is based on a statistical distribution of a parameter of the layer of the AI model. In some embodiments, the first number is based on a first term of a binary decomposition of an expected value of one or more mantissa values of one or more parameters of the AI model. In some embodiments, the first number is zero. In some embodiments, the shifter circuit is wired to receive the first sum and shift the first sum by a second number of bits to generate a second shifted value, wherein the processor is configured to generate the inference of the AI model based on the second shifted value. In some embodiments, the adder circuit is wired to receive the first shifted value and the second shifted value to generate a second sum, wherein the processor is configured to generate the inference of the AI model based on the second sum. In some embodiments, the second number is based on a second term of a binary decomposition of an expected value of one or more mantissa values of one or more parameters of the AI model. In some embodiments, the shifter circuit is wired to shift the first sum leftward by the first number of bits. In some embodiments, the shifter circuit is wired to shift the first sum rightward by the first number of bits.

In one or more embodiments, a method includes storing a first vector and a second vector associated with a layer of an artificial intelligence (AI) model in a memory device, the first vector comprising a first operand having a first mantissa value, and the second vector comprising a second operand having a second mantissa value; routing the first mantissa value and the second mantissa value to an adder circuit of a processor; outputting, by the adder circuit, a first sum based on the first mantissa value and the second mantissa value; routing the first sum to a shifter circuit of the processor; shifting, by the shifter circuit, the first sum by a first number of bits to generate a first shifted value; and generating, by the processor, an inference of the AI model based on the first shifted value. In some embodiments, the first number is based on an expected value of one or more mantissa values associated with the layer of the AI model. In some embodiments, wherein the expected value is based on a statistical distribution of a parameter of the layer of the AI model. In some embodiments, the first number is based on a first term of a binary decomposition of an expected value of one or more mantissa values of one or more parameters of the AI model. In some embodiments, the first number is zero. In some embodiments, the method further includes routing the first sum to the shifter circuit; and shifting, by the shifter circuit, the first sum by a second number of bits to generate a second shifted value. In some embodiments, the method further includes routing the first shifted value and the second shifted value to the adder circuit; and outputting, by the adder circuit, a second sum based on the first shifted value and the second shifted value, wherein the inference is generated based on the second sum. In some embodiments, the second number is based on a second term of a binary decomposition of an expected value of one or more mantissa values of one or more parameters of the AI model. In some embodiments, the shifter circuit is wired to shift the first sum leftward by the first number of bits. In some embodiments, the shifter circuit is wired to shift the first sum rightward by the first number of bits.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a conceptual diagram of an AI model, according to one or more embodiments.
FIG. 2 depicts a block diagram of a system for performing AI computations, according to one or more embodiments.
FIG. 3 depicts an approximation of floating-point multiplication using bit shift and add operations, according to one or more embodiments.
FIG. 4 depicts an example of an AI computation using bit shift and add operations, according to one or more embodiments.
FIG. 5 depicts a flow diagram for an AI computation, according to one or more embodiments.
FIG. 6 depicts a flow diagram for another AI computation, according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

In general terms, AI models may perform a large number of computations during tasks such as inference. These computations may utilize substantial processing resources, which in turn consume electrical power. In some AI models with transformer architectures, the computational cost and power demands of inference can scale quadratically with respect to input sequence length. In some examples, the majority of electricity usage comes from the multiplication of floating-point values involved in element-wise operations and linear transformations.

Example embodiments provide an approximation of the computation of floating-point multiplications by replacing floating-point multiplication with bit-shift and addition operations. The approximation may utilize an expected value (e.g., statistical mean) of the parameters (e.g., weights) of the AI model. In some examples, the parameters (e.g., weights) of the AI model are fixed after training, allowing the identification of the statistical distribution of the parameter values.

Floating-point values may be expressed as a mantissa value, an exponent value, and a sign. The multiplication of two floating-point values x and y may be expressed as: Mul(x, y) = (1 + mₓ) · 2^{eₓ} · (1 + m_{y}) · 2^{e_{y}} = (1 + mₓ + m_{y} + mₓ · m_{y}) · 2^{eₓ+e_{y}}, where mₓ is the mantissa value of x and eₓ is the exponent value of x, and where m_{y} is the mantissa value of y and e_{y} is the exponent value of y. In this floating-point multiplication operation, the multiplication of the mantissa values mₓ · m_{y} may consume higher amounts of power relative to addition operations (e.g., mₓ + m_{y}).

In some embodiments, results of a floating-point multiplication associated with a layer of an AI model is approximated by replacing the mantissa multiplication operation (e.g., mₓ · m_{y}) with bit shift and add operations, which may consume less power and thus provide for more power-efficient AI models. In an example in which x is a model parameter (e.g., weight) value, the multiplication of the mantissa values mₓ · m_{y} may be approximated as mₓ · m_{y} ≈ µ(mₓ + m_{y}) - µ², where µ is an expected value (e.g., statistical mean) of the mantissa value mₓ. The mantissa values may be treated as random variables, and the expected value of the mantissa value, mₓ, of the model parameter value x may be based on a known distribution of parameters (e.g., weights) of a trained AI model. In this regard, the parameters of the trained AI model are fixed, and the distribution of the parameters may be identified.

In some embodiments, the approximation of the mantissa multiplication that includes the expression µ(mₓ + m_{y}) may be decomposed into one or more terms (also referred to herein as mantissa terms) that may be bit shifted and added together, expressed as µ(mₓ + m_{y}) ≈ (mₓ + m_{y}) ≫ a + (mₓ + m_{y}) ≫ b + (mₓ + m_{y}) ≫ c, where a, b, and c represent shift values which informs the direction and number of bit shift places applied to the respective term.

In some embodiments, the expected value, µ, is expressed as a binary decomposition having one or more terms (also referred to herein as expected value terms). For example, assuming the following expected value µ = 1.2656302515, the expected value µ may be expressed as the approximated binary decomposition µ ≈ 2⁰ + 2⁻² + 2⁻⁶. In some examples, the binary decomposition may be truncated to fewer terms or expanded to more terms. The shift values (e.g., a, b, and c) of the mantissa terms may be based on the exponent of the corresponding term of the binary decomposition of the expected value, µ. In some examples, a positive exponent value indicates a leftward bit shift, a negative exponent value indicates a rightward bit shift, and an exponent value of 0 indicates no bit shift.

In the above example, as the exponent of the first expected value term is 0, the shift value of the first mantissa term is 0, and the first mantissa term is not shifted. As the exponent of the second expected value term is -2, the second mantissa term is shifted rightward by 2 places. As the exponent of the third expected value term is -6, the third mantissa term is shifted rightward by 6 places. These terms may be added together to arrive at an approximation for µ(mₓ + m_{y}). This may be expressed as (*mₓ* + *m_{y}*) + (*mₓ* + *m_{y}*) » 2 + (*mₓ* + *m_{y}*) » 6.

Such techniques reduce the amount of multiplication operations used in running AI tasks such as inference. Activating a hardware multiplier may consume significantly more power than activating hardware adders and shifters. Multiplier operations may involve greater switching activity and occupy more silicon area, leading to higher dynamic and static power consumption. Adder and shifter operations may be simpler. For example, adders may include straightforward carry chains or parallel logic, and shifters may be implemented with relatively simple wiring and control logic. As a result, both adders and shifters may operate with lower power overhead compared to multipliers. Utilizing shift and add operations instead of multiplier operations may reduce the time and power consumption of such computations, improving the overall efficiency of AI models.

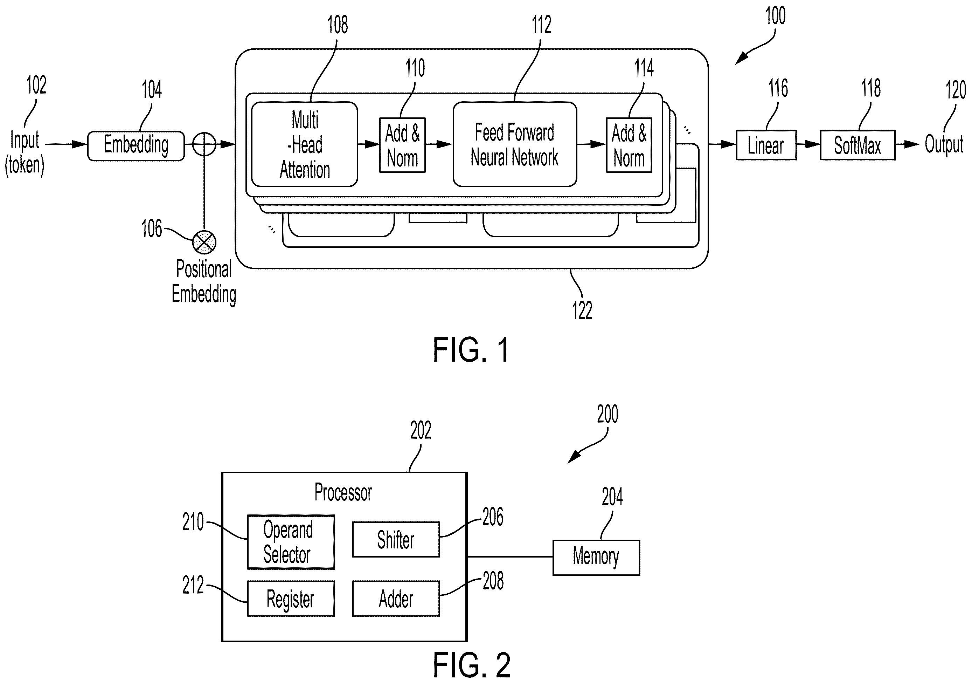

FIG. 1 depicts a conceptual diagram of an inference task of an AI model 100, according to one or more embodiments. In some embodiments, the AI model 100 may be a large language model (LLM), a convolutional neural network (CNN), a recurrent neural network, or a generative adversarial network (GAN), among others. The inference process may begin when at input 102 to the AI model 100 is received. The input 102 may include a sequence of tokens representing a text-based prompt such as a natural language prompt. In some embodiments, the input 102 may be based on other types of prompts such as image, audio, structured data, among others. The input 102 (e.g., tokens) may be converted into a numerical embedding vector via an embedding 104. The embedding 104 may map discrete tokens into a continuous space that captures semantic relationships. An embedding vector may include multiple floating-point values (e.g., FP32, FP16, etc.) that represent the semantic and syntactic characteristics of a token in a high-dimensional space. In some embodiments, to retain the order of the sequence of tokens, a positional embedding 106 is added to the token embedding 104.

The resulting vector is passed into a neural network layer also implemented as a transformer layer 122. In some embodiments, the transformer layer 122 includes a multi-head attention module 108, a feed-forward neural network 112, and first and second add and normalize computation units 110, 114. The various components of the transformer layer 122 may be implemented via any combination of software, firmware and/or hardware configured to provide the functionality described herein in connection with the component.

The multi-head attention module 108 may compute attention weights across one or more (e.g., all) token positions of the input vector using one or more computational units referred to as attention heads. The computations may be performed concurrently or in parallel by multiple parallel attention heads. The computations by the different attention heads may focus or attend to different types or relationships of the tokens in the input vector, and the outputs from the different attention heads may be concatenated to generate a resulting output. The multi-head attention module 108 may engage in a significant amount of floating-point multiplication to perform the computations. For example, floating-point multiplication is used to calculate attention scores via matrix multiplications between query, key, and value vectors. Floating-point multiplication may also be used for applying attention weights to the value vectors, enabling the model to combine information from different token positions with varying importance. These matrix operations may be performed using floating-point arithmetic, such as in 16-bit (FP16), 32-bit (FP32), or mixed-precision formats.

The result of the multi-head attention module 108 may be passed the first add and normalize computational unit 110, where the original input 102 is added to the output of the multi-head attention module 108. The sum may be normalized to keep the sum within a consistent range across tokens and layers. Floating-point multiplication may be used during this process, such as to compute mean and variance values and scaling the outputs using learned parameters.

The normalized result from the first add and normalize computational unit 110 may be fed into the feed-forward neural network (FFN) 112. In some embodiments, the FFN 112 processes the received input at individual token positions independently using two linear transformations with a non-linear activation in between. Both linear layers within the FFN 112 may be composed of matrix multiplications, which includes floating-point multiplications to compute the dot products between weight matrices and input vectors. These operations may enable the network to learn complex transformations of the input features. The result of the FFN 112 may be provided to the second add and normalize computational unit 114 for conducting a second residual connection and normalization step, which may also use floating-point multiplication to maintain numerical stability and consistent scaling of values.

The operations of the transformer layer 122 via the multi-head attention module 108, first add and normalize computation unit 110, FFN 112, and the second add and normalize computation unit 114, may be repeated multiple times (e.g., 96 times) based on a prior transformer layer 122 output, with the repetitions deepening the model's understanding of the input by gradually building more context-aware and semantically rich representations of the input 102. In some embodiments, a pass through the transformer layer 122 involves numerous (e.g., billions) floating-point multiplications, based on factors such as model size, number of heads in the multi-head attention module 108, width of the FFN 112, and sequence length of the input 102.

In some embodiments, a result of a last pass through the transformer 122 is provided to a linear layer 116 of the AI model 100. The linear layer 116 may include a fully connected layer that projects the high-dimensional token representations into a vector corresponding to the size of a vocabulary of the AI model. The linear layer 116 may also perform matrix multiplications using floating-point multiplications to generate raw prediction scores (e.g., logits) for possible tokens. This result of the linear layer 118 may be fed into a softmax layer 118, which converts the logits into probabilities by exponentiating and normalizing the prediction scores. This process may also involve floating-point multiplications. One of the tokens, such as, for example, a token with the highest probability may be selected as an output 120 of the AI model 100. The output may be, for example, a predicted text, image, audio, or the like, based on the input 102

In some embodiments, the AI model 100 generates contextual and coherent outputs by repeatedly transforming and enriching the input 102 through stacked transformer operations. These operations involve many matrix multiplications operations. A matrix multiplication operation decomposes into a series of scalar multiplications between individual floating-point values, such as elements from an input activation vector and a corresponding weight matrix. The floating-point value may be represented in a hardware-specific format, such as a format conforming to the IEEE 754 standard. In this format, the floating-point value is decomposed into three components: 1) a sign bit; 2) an exponent; and 3) a mantissa. A processor or dedicated hardware unit may perform a floating-point multiplication operation based on the decomposed representation of the floating-point value by conducting a multiplication of the mantissas, adding the exponents (e.g., with bias adjustment), computing the sign, and normalizing the result of the addition and multiplication.

FIG. 2 depicts a block diagram of a computing device 200 for implementing the functionality of the various components of the AI model 100, according to one or more embodiments. The computing device 200 may include, without limitation, a processor 202 and a memory 204. In some embodiments, the parameters (e.g., weights, biases, etc.) of the AI model 100, input tokens and/or vectors, activations, outputs, and other data associated with the inference process and with the AI model 100 may be stored in the memory 204. The processor 202 may include a central processing unit (CPU) or a graphics processing unit (GPU), among others. The memory 204 may include a dynamic random-access memory (DRAM) device, a static random-access memory (SRAM) device, a compute express link (CXL) memory device, among other memory types.

In some embodiments, the processor 202 includes a shifter 206 and an adder 208. The processor 202 may also include an operand selector 210 and a register 212. The operand selector 210 may be a hardware component, such as a multiplexer, that routes a specified operand from among multiple inputs to downstream hardware components such as the shifter 206 and the adder 208. Control signals generated by the processor's control logic or instruction decoder may govern the selection of operands by the operand selector 210. The register 212 may include a fast, local storage element used to hold operand values, intermediate results, or control data during stages of computations. For example, inputs to and/or outputs from the shifter 206 and/or adder 208 may be stored in the register 212 for access by other components for further manipulation of the data.

The shifter 206 may be configured to implement a bit shift operation of an AI computation. The adder 208 may be configured to implement an add operation of the AI computation. In some embodiments, the processor 202 may include multiple shifters 206 and/or multiple adders, and multiple bit shift and/or add operations may be performed at least partially concurrently. In some embodiments, activating a hardware multiplier to perform floating-point multiplication may consume significantly more power than activating the adders 208 and shifters 206. Multiplication operations may involve greater switching activity and occupy more silicon area, leading to higher dynamic and static power consumption. In comparison, adders 208 and shifters 206 may operate with lower power overhead than multipliers.

The shifter 206 may be implemented via dedicated logic units that reposition bits within a data word. In some embodiments, the shifter 206 may include a logical shifter that shifts bits left or right and fills vacated positions with zeros. In some embodiments, the shifter 206 may include an arithmetic shifter that performs right shifts while preserving the sign bit to maintain signed number semantics.

The adder 208 may be implemented as digital circuits that perform binary addition across one or more bits. In some examples, the adder 208 includes a half-adder configure to combine two single-bit inputs to produce a sum and carry output. In some examples, the adder 208 includes a full-adder configured to add two single-bit inputs plus an additional carry-in to generate a sum and carry-out. In some embodiments, full-adders may be chained together in a ripple-carry adder configuration. In some embodiments, other adder types or configurations such as carry-select, carry-skip, and carry-save adders may be utilized.

The computing device 200 and process according to the embodiments of the present disclosure may reduce the number of multiplication operations performed in computational hardware by approximating results of floating-point multiplication with additions and bit-shifts performed in hardware adders and shifters. Multiplication may be more costly than addition or bit-shifting in terms of power consumption and latency. Thus, embodiments of the present disclosure may reduce power consumption and latency associated with AI models, which may enhance performance across a wide range of AI applications as well as the devices on which the AI applications are run. This may be particularly beneficial for devices with limited power storage and AI applications in which speed and latency may be important performance metrics. The reduction of power consumption may also make AI models more environmentally friendly to run.

For example, since multipliers generally consume more energy than adders, reducing their use helps decrease power draw and thermal output. This may be one important factor in battery-powered devices, embedded systems, and high-density computing environments. In some hardware implementations, minimizing multiplication and the need for many multipliers may also reduce silicon area and design complexity, allowing for more compact and efficient designs.

In another example of autonomous vehicle systems, AI tasks such as image classification and object detection may be carried out using deep convolutional neural networks (CNNs) and the like, which perform numerous matrix multiplications across multiple layers to extract and classify features from input images. Embodiments of the present disclosure may reduce the latency associated with such matrix operations, thus reducing the time it takes to analyze high-resolution visual data and output inferences or predictions related to detected images or objects. This improvement in processing speed may support faster detection of traffic signs, pedestrians, other vehicles, and road features, thereby contributing to improved responsiveness and safety in real-time driving scenarios. For example, the speed in which the matrix multiplications are performed may affect the speed in which an autonomous vehicle system is controlled to move to avoid collision or other hazardous situations.

Overall, embodiments of the present disclosure computational efficiency, reduces power, hardware costs, and supports scalable, high-performance implementations across a range of systems that benefit from reduced computational and hardware complexity.

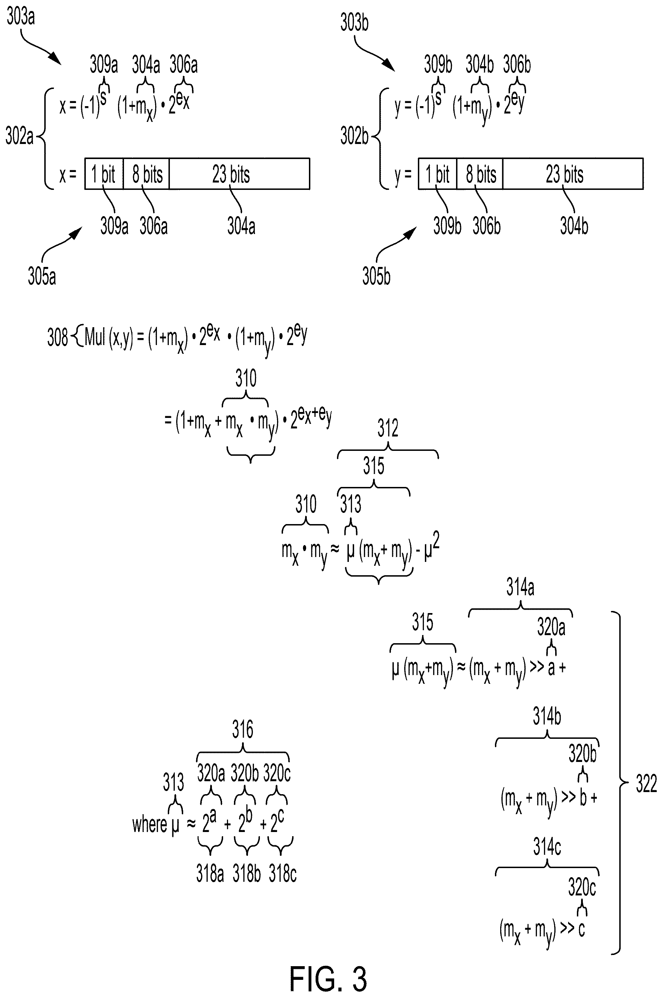

FIG. 3 depicts an approximation of a mathematical computation including a floating-point multiplication of a first floating-point value 302a, x, and a second floating-point value 302b, y, using bit shift and add operations via the shifter 206 and the adder 208, according to one or more embodiments. The first floating-point value 302a, x, may be expressed in a mathematical expression 303a (e.g., according to IEEE 754) as a first mantissa 304a, a first exponent 306a, and a first sign 309a. The first floating-point value 302a, x, may also be expressed in a binary notation 305a (e.g., according to IEEE 754), in which the most significant bit represents the first sign 309a, the next 8 bits represents the first exponent 306a, and the next 23 bits represents the first mantissa 304a.

The second floating-point value 302b, y, may be expressed in a mathematical expression 303b (e.g., according to IEEE 754) as a second mantissa 304b, a second exponent 306b, and a second sign 309b. The second floating-point value 302b, y, may also be expressed in a binary notation 305b (e.g., according to IEEE 754), in which the most significant bit represents the second sign 309b, the next 8 bits represents the second exponent 306b, and the next 23 bits represents the second mantissa 304b.

A floating-point multiplication 308 of the first floating-point value 302a, x, and the second floating-point value 302b, y, may be expressed as: Mul(x, y) = (1 + mₓ) · 2^{eₓ} · (1 + m_{y}) · 2^{e_{y}} = (1 + mₓ + m_{y} + mₓ · m_{y}) · 2^{eₓ+e_{y}}, where mₓ is the mantissa value 304a of x and eₓ is the exponent value 306a of x, and where m_{y} is the mantissa value 304b of y and e_{y} is the exponent value 306b of y. According to the floating-point multiplication 308 operation, a mantissa multiplication 310 of the mantissa values mₓ · m_{y} may consume higher amounts of power relative to addition operations (e.g., mₓ + m_{y}).

In some embodiments, the first mantissa value 304a and the second mantissa value 304b are treated as random variables, and the processor 202 approximates the mantissa multiplication 310 operation (mₓ · m_{y}) using a bilinear expansion 312 expression, mₓ · m_{y} ≈ µ(mₓ + m_{y}) - µ², where µ is an expected value 313 (e.g., statistical mean) of the mantissa values 304a, 304b. In an example in which the first floating-point value 302a, x, is a model parameter (e.g., weight) value of a trained AI model, the first mantissa value 304a, mₓ, may be treated as a random variable, and the expected value of the first mantissa value, mₓ, may be computed based on a known distribution of parameters (e.g., weights) of the trained AI model. Since the parameters of the trained AI model are fixed and known, the distribution of the parameters may be identified. Thus, the expected value of the parameters can also be identified. In some embodiments, the processor 202 computes the expected value of the parameters of the AI model 100 (e.g., prior to performing the AI computations), and stores the expected value in the memory 204 for retrieval by the processor 202 to perform the AI computations.

In some embodiments, the distribution of the parameters is a normal distribution. In some embodiments, the second floating-point value 302b is an activation value, and the expected value of the second mantissa 304b may be unknown. In some embodiments, the expected value of the second mantissa value 304b is assumed to also follow a normal distribution and may be substituted with the known expected value of the first mantissa 304a. In this regard, as calculations are performed numerous times over numerous (e.g., billions) samples, an assumption may be made that the response may converge to the known distribution of the parameters (e.g., normal distribution).

In some embodiments, the expected value 313, µ, is expressed as a binary decomposition 316 having one or more terms 318a, 318b, 318c, also referred to herein as expected value terms (e.g., a first expected value term 318a, a second expected value term 318b, and a third expected value term 318c). The expected value terms 318a, 318b, 318c, may be base 2 with respective exponents (e.g., a first expected value exponent a 320a, a second expected value exponent b 320b, and third expected value exponent c 320c). In some examples, the binary decomposition 316 may be truncated to fewer terms or expanded to more terms, depending on a desired level of accuracy of the decomposed value 316 to the expected value 313.

In some embodiments, the processor 202 decomposes a multiplication component 315, µ(mₓ + m_{y}), of the bilinear expansion 312, µ(mₓ + m_{y}) - µ², into a bit shift and add operations 322, which include one or more terms, also referred to herein as mantissa terms (e.g., a first mantissa term 314a, a second mantissa term 314b, and a third mantissa term 314c (collectively referred to as mantissa terms 314) that may be bit shifted and added together. The bit shift and add operations 22 may be expressed as µ(mₓ + m_{y}) = (mₓ + m_{y}) ≫ a + (mₓ + m_{y}) ≫ b + (mₓ + m_{y}) ≫ c, where a, b, and c represent shift values which inform the direction and number of bit shift places applied to the respective term. The shift values (e.g., a, b, and c) of the mantissa terms may be the value of the exponent of the corresponding term of the binary decomposition 316 of the expected value 313, µ.

The first expected value exponent 320a may also be referred to as a first shift value. The second expected value exponent 320b may also be referred to as a second shift value. The third expected value exponent 320cmay also be referred to as a third shift value. In some embodiments, the shift values (e.g., the first shift value, the second shift value, and the third shift value) may be stored in memory 204 and loaded into the processor 202 for performing one or more approximation computations. In some embodiments, the shift values may be stored in a cache of the processor 202.

In some examples, a positive exponent value (shift value) indicates a leftward bit shift, a negative exponent value (shift value) indicates a rightward bit shift, and an exponent value (shift value) of 0 indicates a bit shift of 0, or no bit shift. The mantissa terms 314 may be added together to arrive at an approximation for the multiplication component 315, µ(mₓ + m_{y}), of the bilinear expansion 312, µ(mₓ + m_{y}) - µ², which may replace the mantissa multiplication 310 of the floating-point multiplication 308.

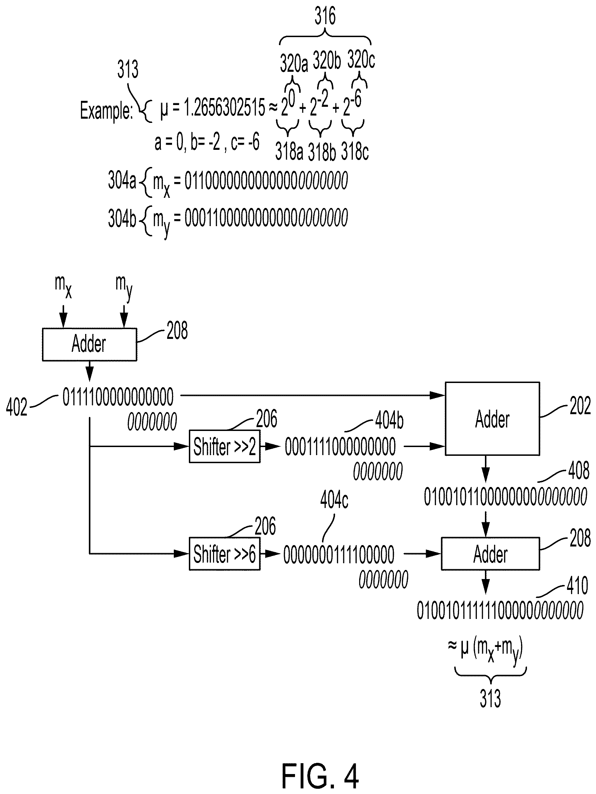

FIG. 4 depicts an example of an AI computation using bit shift and add operations, according to one or more embodiments. In the example depicted in FIG. 4, the first mantissa 304a, mₓ, has a value, expressed in binary, of 01100000000000000000000, and the second mantissa 304b, m_{y}, has a value, expressed in binary, of m_{y}, 00011000000000000000000. The expected value 313 in the example of FIG. 4, µ = 1.2656302515, may be expressed as an approximated binary decomposition 316 µ ≈ 2⁰ + 2⁻² + 2⁻⁶. The first expected value term 318a in the example of FIG. 4 has a first expected value exponent 320a, a = 0, the second expected value term 318b has a second expected value exponent 320b, b = -2, and the third expected value term 318c has a third expected value exponent 320c, c = -6.

Based on the processor 202 identifying the mantissa and expected values, the multiplication component 315, µ(mₓ + m_{y}), of the bilinear expansion 312, µ(mₓ + m_{y}) - µ² may be expressed as shift and add operations 322 (01100000000000000000000 + 00011000000000000000000) ≫ 0 + (01100000000000000000000 + 00011000000000000000000) ≫ -2 + (01100000000000000000000 + 00011000000000000000000) ≫ -6. In some embodiments, the processor 202 may perform the shift and add operations using the adder 208 and the shifter 206. In some embodiments, the processor 202 obtains a first sum 402 of the mantissa values 304 by adding the first mantissa, m_{y} = 01100000000000000000000, and the second mantissa, mₓ = 00011000000000000000000, using the adder 208. In some embodiments, the processor 202 may load the shift values (e.g., the first shift value, the second shift value, and the third shift value) from the memory 204 to perform the bit shifts using the shifter 206. In some examples, the shift values may be stored in a cache of the processor 202 and accessed when performing bit shifts.

In the example of FIG. 4, since the first expected value exponent (e.g., first shift value) 320a is 0, the first mantissa term 314a is not bit shifted. The second expected value exponent (e.g., second shift value) 320b in the example of FIG. 4 is -2. The processor 202 processes the first sum 402 through the shifter 206 which applies a rightward bit shift to the first sum 402 by 2 places, resulting in a second bit shifted value 404b.

The third expected value exponent (e.g., third shift value) 320c in the example of FIG. 4 is -6. The processor 202 processes the first sum 402 through the shifter 206 which applies a rightward bit shift to the first sum 402 by 6 places, resulting in a third bit shifted value 404c. The processor 202 may add the first sum 402 (e.g., mₓ + m_{y}) and the second bit shifted value 404b using the adder 208, resulting in a second sum 408. The processor 202 may add the second sum 408 and the third bit shifted value 404c using the adder 208, resulting in a third sum 410. In this example, the third sum 410 is an approximation of the multiplication component 315, µ(mₓ + m_{y}), of the bilinear expansion 312, µ(mₓ + m_{y}) - µ², which may replace the mantissa multiplication 310 of the floating-point multiplication 308.

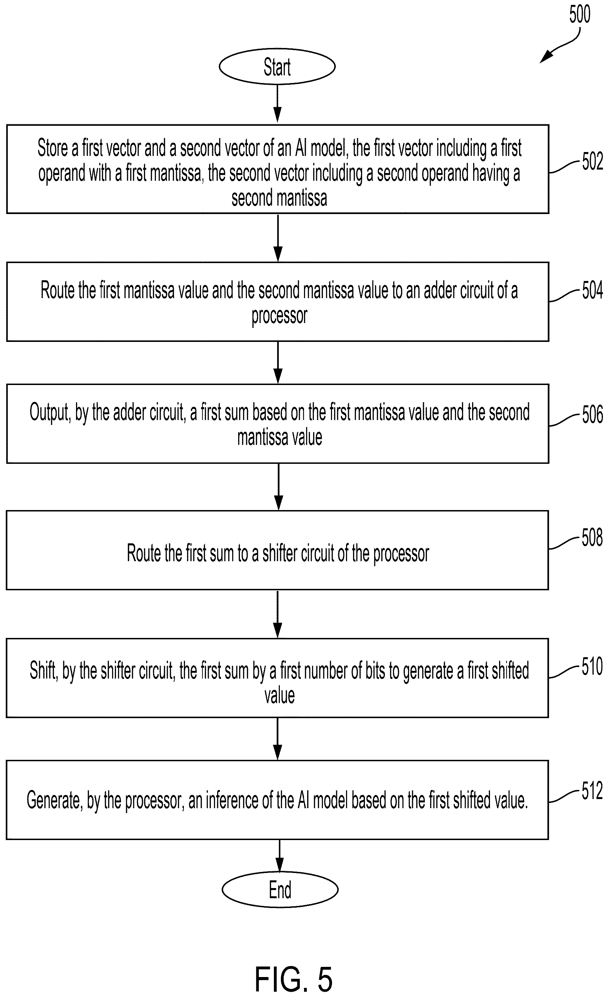

FIG. 5 depicts a flow diagram for an AI computation process 500 performed by the transformer layer 212 of the AI model 100 during an inference stage, according to one or more embodiments. In some embodiments, the process 500 is performed by the processor 202.

At operation 502, the processor 202 may store a first vector and a second vector associated with a layer (e.g., a first transformer layer 122) of an AI model 100 in a memory device 204. The first vector may include a first operand (e.g., element) having a first mantissa value. The second vector may include a second operand (e.g., element) having a second mantissa value. In some embodiments, the first vector is a weight parameter of the AI model 100 and the second vector is an activation vector of the AI model. In some embodiments, at least one of the first number or the second number is a variable having a known statistical distribution, such as the statistical distribution of parameter (e.g., weight) values of the AI model 100. In some embodiments, the statistical distribution is a normal distribution.

At operation 504, the processor 202 may route the first mantissa value and the second mantissa value to an adder circuit of the processor 202. The adder circuit may include circuitry that includes one or more adders 208. An adder of the adder circuit may receive the first mantissa value and the second mantissa value as inputs.

At operation 506, the adder circuit may output a first sum based on adding the first mantissa value and the second mantissa value.

At operation 508, the processor 202 may route the first sum to a shifter circuit of the processor 202. The shifter circuit may include one or more shifters 206. A shifter 206 of the shifter circuit may receive the first sum as an input. The shifter 206 may also receive a first number as an input. The first number represents the number of bits by which to shift the first sum.

At operation 510, the shifter circuit (e.g., shifter 206) may shift the first sum by the first number of bits to generate a first shifted value. In some embodiments, the first number is based on an expected value of one or more mantissa values associated with the layer of the AI model. In some embodiments, the expected value is based on a statistical distribution of a parameter of the layer of the AI model. In some embodiments, the expected value is an approximation of one or more mantissas associated with the trained AI model. In some embodiments, the first number is based on a first term of a binary decomposition of an expected value of one or more mantissa values of one or more parameters of the AI model. For example, the expected value may be the statistical mean of the mantissas of the weights of the trained AI model. In some embodiments, the expected value may be approximated as a binary decomposition having one or more terms, in which a term is expressed as an exponent of base 2. In some examples, the binary decomposition may be truncated to include fewer terms or expanded to include more terms. In some examples, the processor 202 interprets a positive exponent value as a leftward bit shift, a negative exponent value as a rightward bit shift, and an exponent value of 0 as no bit shift.

At operation 512, the processor 202 may generate an inference of the AI model based on the first shifted value. In some embodiments, the process 500 further includes routing the first sum to the shifter circuit, and shifting, by the shifter circuit, the first sum by a second number of bits to generate a second shifted value. In some embodiments, the process 500 further includes routing the first shifted value and the second shifted value to the adder circuit, and outputting, by the adder circuit, a second sum based on the first shifted value and the second shifted value. In some embodiments, the inference is generated based on the second sum. In some embodiments, the second number is based on a second term of a binary decomposition of an expected value of one or more mantissa values of one or more parameters of the AI model.

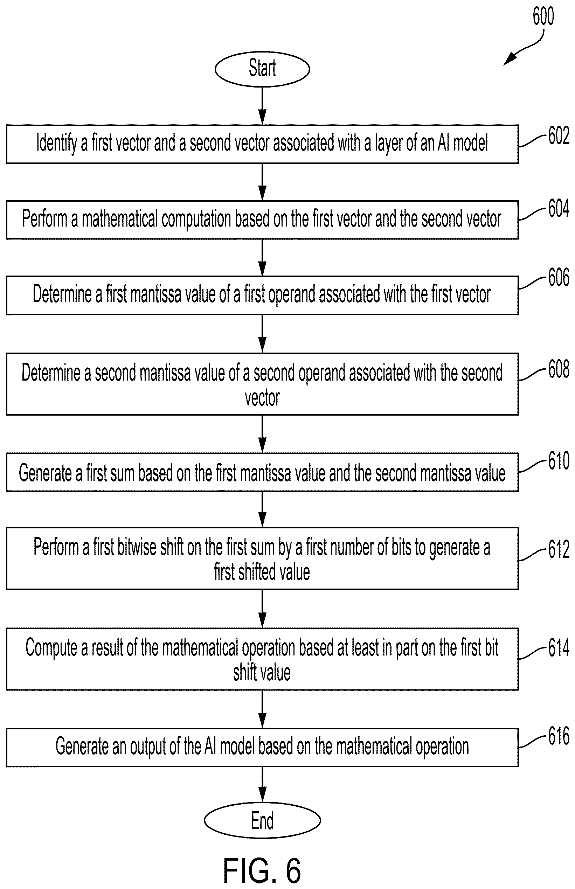

FIG. 6 depicts a flow diagram for another AI computation process 600, according to one or more embodiments. In some embodiments, the process 600 is performed by the processor 202, utilizing the shifter 206 and adder 208.

At operation 602, the processor 202 may identify a first vector and a second vector associated with a layer of an AI model. In some embodiments, the first vector may be associated with an activation. In some embodiments, the second vector is associated with one or more parameters of the AI model. The activation may be an input into the layer of the AI model. The AI model may be a trained AI model having a known distribution of parameter (e.g., weight) values. The AI model may be associated with an identified expected value (e.g., statistical mean) of the mantissas of the one or more parameters of the AI model. In some embodiments, the expected value may be approximated as a binary decomposition having one or more terms, in which a term is expressed as an exponent of base 2.

At operation 604, the processor 202 may perform a mathematical computation based on the first vector associated with the AI model and the second vector.

At operation 606, the processor 202 may determine a first mantissa value of a floating-point expression of a first operand associated with the first vector. The first operand may be a value of the first vector, such as weight value. In some embodiments, the first mantissa value is expressed as a binary value.

At operation 608, the processor 202 may determine a second mantissa value of a of a floating-point expression of a second operand associated with the second vector. The second operand may be a value of the second vector, such as an activation value. In some embodiments, the second mantissa value is expressed as a binary value.

At operation 610, the adder 208 may generate a first sum of the first mantissa value and the second mantissa value.

At operation 612, the shifter 206 may perform a first bit shift on the first sum by a first number of bits to generate a first shifted value. The first number may be based on a first term of the binary decomposition of the expected value. For example, the first number may be 0, and the first sum may be bit shifted by 0 places (e.g., not bit shifted). In another example, the first number may be a negative number, and the first bit shift may include a leftward bit shift. In yet another example, the first number may be a positive number, and the first bit shift may include a rightward bit shift.

In some embodiments, the shifter 206 may perform a second bit shift on the first sum by the second number of bits to generate a second shifted value. In some embodiments, the adder 208 may generate a second sum based on adding the first shifted value and the second shifted value.

At operation 614, the processor 202 may compute a result of the mathematical operation based at least in part on the first bit shifted value. In some embodiments, the processor 202 may compute a result of the mathematical operation based at least in part on the second sum. The mathematical operation may include determining a third sum based at least in part on the first mantissa value, the second mantissa value, the first shifted value, and a square of the expected value.

At operation 616 the processor 202 generates an output of the AI model based on the mathematical operation. In some embodiments, the mathematical operation includes addition and bit shift operations utilizing the adder 208 and the shifter 206 of the processor 202. The addition and bit shift operations approximates the results of matrix multiplication that utilize floating-point multiplications which are more resource intensive than addition and bit shift operations.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for AI computations have been specifically described and illustrated herein, many modifications and variations will be apparent to those skilled in the art. Accordingly, it is to be understood that systems and methods for AI computations constructed according to principles of this disclosure may be embodied other than as specifically described herein. The disclosure is also defined in the following claims, and equivalents thereof.

The systems and methods for artificial intelligence computations may contain one or more combination of features set forth in the below statements.

Statement 1: An apparatus, comprising: a memory storing a first vector and a second vector associated with a layer of an artificial intelligence (AI) model, the first vector comprising a first operand having a first mantissa value, and the second vector comprising a second operand having a second mantissa value; and a processor comprising: an adder circuit wired to receive the first mantissa value and the second mantissa value and generate a first sum based on the first mantissa value and the second mantissa value; and a shifter circuit wired to receive the first sum and shift the first sum by a first number of bits to generate a first shifted value; and wherein the processor is configured to generate an inference of the AI model based on the first shifted value.

Statement 2: In the apparatus of Statement 1, wherein the first number is based on an expected value of one or more mantissa values associated with the layer of the AI model.

Statement 3: In the apparatus of Statement 1 or 2, wherein the expected value is based on a statistical distribution of a parameter of the layer of the AI model.

Statement 4: In the apparatus of any one of Statements 1-3, wherein the first number is based on a first term of a binary decomposition of an expected value of one or more mantissa values of one or more parameters of the AI model.

Statement 5: In the apparatus of any one of Statements 1-4, wherein the first number is zero.

Statement 6: In the apparatus of any of Statements 1-5, wherein the shifter circuit is wired to receive the first sum and shift the first sum by a second number of bits to generate a second shifted value, wherein the processor is configured to generate the inference of the AI model based on the second shifted value.

Statement 7: In the apparatus of any one of Statements 1-6, wherein the adder circuit is wired to receive the first shifted value and the second shifted value to generate a second sum, wherein the processor is configured to generate the inference of the AI model based on the second sum.

Statement 8: In the apparatus of any one of Statements 1-7, wherein the second number is based on a second term of a binary decomposition of an expected value of one or more mantissa values of one or more parameters of the AI model.

Statement 9: In the apparatus of any one of Statements 1-8, wherein the shifter circuit is wired to shift the first sum leftward by the first number of bits.

Statement 10: In the apparatus of any of Statements 1-9, wherein the shifter circuit is wired to shift the first sum rightward by the first number of bits.

Statement 11: A method, comprising: storing a first vector and a second vector associated with a layer of an artificial intelligence (AI) model in a memory device, the first vector comprising a first operand having a first mantissa value, and the second vector comprising a second operand having a second mantissa value; routing the first mantissa value and the second mantissa value to an adder circuit of a processor; outputting, by the adder circuit, a first sum based on the first mantissa value and the second mantissa value; routing the first sum to a shifter circuit of the processor; shifting, by the shifter circuit, the first sum by a first number of bits to generate a first shifted value; and generating, by the processor, an inference of the AI model based on the first shifted value.

Statement 12: In the method of Statement 11, wherein the first number is based on an expected value of one or more mantissa values associated with the layer of the AI model.

Statement 13: In the method of Statements 11 or 12, wherein the expected value is based on a statistical distribution of a parameter of the layer of the AI model.

Statement 14: In the method of any of Statements 11-3, wherein the first number is based on a first term of a binary decomposition of an expected value of one or more mantissa values of one or more parameters of the AI model.

Statement 15: In the method of any of Statements 11-4, wherein the first number is zero.

Statement 16: In the method of any of Statements 11-5, further comprising: routing the first sum to the shifter circuit; and shifting, by the shifter circuit, the first sum by a second number of bits to generate a second shifted value.

Statement 17: In the method of any of Statements 11-6, further comprising:
routing the first shifted value and the second shifted value to the adder circuit; and outputting, by the adder circuit, a second sum based on the first shifted value and the second shifted value, wherein the inference is generated based on the second sum.

Statement 18: In the method of any of Statements 11-7, wherein the second number is based on a second term of a binary decomposition of an expected value of one or more mantissa values of one or more parameters of the AI model.

Statement 19: In the method of any of Statements 11-8, wherein the shifter circuit is wired to shift the first sum leftward by the first number of bits.

Statement 20: In the method of any of Statements 11-9, wherein the shifter circuit is wired to shift the first sum rightward by the first number of bits.

## Claims

1. An apparatus, comprising:
a memory storing a first vector and a second vector associated with a layer of an artificial intelligence, Al, model, the first vector comprising a first operand having a first mantissa value, and the second vector comprising a second operand having a second mantissa value; and
a processor comprising:
an adder circuit wired to receive the first mantissa value and the second mantissa value and generate a first sum based on the first mantissa value and the second mantissa value; and
a shifter circuit wired to receive the first sum and shift the first sum by a first number of bits to generate a first shifted value; and
wherein the processor is configured to generate an inference of the AI model based on the first shifted value.

2. The apparatus of claim 1, wherein the first number is based on an expected value of one or more mantissa values associated with the layer of the AI model.

3. The apparatus of claim 2, wherein the expected value is based on a statistical distribution of a parameter of the layer of the AI model.

4. The apparatus of claim 1, wherein the first number is based on a first term of a binary decomposition of an expected value of one or more mantissa values of one or more parameters of the AI model.

5. The apparatus of any one of claims 1 to 4, wherein the first number is zero.

6. The apparatus of any one of claims 1 to 5, wherein the shifter circuit is wired to receive the first sum and shift the first sum by a second number of bits to generate a second shifted value, wherein the processor is configured to generate the inference of the AI model based on the second shifted value.

7. The apparatus of claim 6, wherein the adder circuit is wired to receive the first shifted value and the second shifted value to generate a second sum, wherein the processor is configured to generate the inference of the AI model based on the second sum.

8. The apparatus of claim 6 or 7, wherein the second number is based on a second term of a binary decomposition of an expected value of one or more mantissa values of one or more parameters of the AI model.

9. The apparatus of any one of claims 1 to 8, wherein the shifter circuit is wired to shift the first sum leftward by the first number of bits.

10. The apparatus of any one of claims 1 to 8, wherein the shifter circuit is wired to shift the first sum rightward by the first number of bits.

11. A method, comprising:
storing a first vector and a second vector associated with a layer of an artificial intelligence, AI, model in a memory device, the first vector comprising a first operand having a first mantissa value, and the second vector comprising a second operand having a second mantissa value;
routing the first mantissa value and the second mantissa value to an adder circuit of a processor;
outputting, by the adder circuit, a first sum based on the first mantissa value and the second mantissa value;
routing the first sum to a shifter circuit of the processor;
shifting, by the shifter circuit, the first sum by a first number of bits to generate a first shifted value; and
generating, by the processor, an inference of the AI model based on the first shifted value.

12. The method of claim 11, wherein the first number is based on an expected value of one or more mantissa values associated with the layer of the AI model.

13. The method of claim 12, wherein the expected value is based on a statistical distribution of a parameter of the layer of the AI model.

14. The method of claim 11, wherein the first number is based on a first term of a binary decomposition of an expected value of one or more mantissa values of one or more parameters of the AI model.

15. The method of any one of claims 11 to 14, wherein the first number is zero.
